# EUROPEAN PATENT SPECIFICATION

(11) **EP 3 945 919 B1**
(45) Date of publication and mention of the grant of the patent: **01.11.2023**
(21) Application number: 20718726.1
(22) Date of filing: 31.03.2020
(51) Int. Cl.: A43B 1/10, A43B 3/02, A43B 13/18, A43B 7/12, A43B 7/14, B29D 35/00

(54) **A METHOD OF FORMING AN ITEM OF FOOTWEAR AND AN ITEM OF FOOTWEAR**
VERFAHREN ZUR HERSTELLUNG EINES SCHUHS UND SCHUH
PROCÉDÉ DE FORMATION D'UN ARTICLE CHAUSSANT ET ARTICLE CHAUSSANT

(30) Priority: 03.04.2019 GB 201904702
(43) Date of publication of application: 09.02.2022
(73) Proprietor: FITFLOP LIMITED, London EC4A 3AQ (GB)
(72) Inventor: LILLEY, Kim, London EC4A 3AQ (GB)
(74) Representative: Boult Wade Tennant LLP
(86) International application number: PCT/GB2020/050856
(87) International publication number: WO 2020/201738

(56) References cited:
- CN-Y- 2 608 267
- JP-A- 2002 191 404
- US-A1- 2004 020 077
- US-A1- 2015 128 448
- US-A1- 2015 272 272

## Description

The present invention relates to a method of forming an item of footwear and an item of footwear. In particular, the item of footwear is a boot formed of vulcanised rubber such as a Wellington boot.

Methods for manufacturing such boots are generally well-known and involve vulcanising a rubber material to form this material into the shape of the boot and thereby attach a sole member to an upper part of the boot. Vulcanisation is the process of curing elastomers and the terms vulcanisation and curing are sometimes used interchangeably. Traditionally, the vulcanised sole member is formed of a solid piece of the rubber material. This piece of the rubber material is particularly heavy and, given the natural characteristics of rubber, can be uncomfortable for a user to wear. Traditional materials which have been used to increase the comfort in other items of footwear are generally not able to survive the vulcanisation process.

There is therefore a need for an improved method of forming an item of footwear and item of footwear.

JP 2002 191404 A discloses footwear for angling.

US 2004/020077 A1 discloses a waterproof footwear including a neoprene sock having a floor region and a side wall extending upward therefrom terminating in an upper edge.

CN 2 608 267 Y discloses a hot vulcanization cold bonding shoe consisting of a shoe sole and a shoe upper.

A method of forming an item of footwear according to the present invention is provided according to claim 1. This method allows for a vulcanised rubber item of footwear to be formed while increasing the comfort and reducing the weight of the item of footwear.

Step (a) may comprise moulding the sole member to form the cavity. Moulding is a particularly effective method of shaping rubber materials.

The first rubber material may comprise synthetic rubber in an amount of from about 4 wt% to about 6 wt% and natural rubber in an amount of from about 40 wt% to about 50 wt% based on the total weight of the first rubber material, and/or the second rubber material comprises synthetic rubber in an amount of from about 4 wt% to about 6 wt% and natural rubber in an amount of from about 40 wt% to about 50 wt% based on the total weight of the second rubber material.

The first and/or second rubber material may consist essentially of: a natural rubber, a synthetic rubber, silicon dioxide and/or calcium carbonate, and one or more of zinc oxide, an accelerant and an antioxidant.

The insert may comprise a plurality of air pockets or channels arranged within the insert. These act to reduce the compressive resistance of a material. In particular, a material which may have as a solid block a compressive resistance which is too large to be cushioning can be modified into a cushioning material by the introduction of these air pockets or channels. This also reduces the weight of the insert.

The air pockets or channels may be regularly arranged within the insert. Regularly arranged air pockets or channels distribute the compressive resistance evenly across the insert.

The air pockets or channels may form a honeycomb structure. A honeycomb structure is an effective pattern for these air pockets or channels.

The insert may be formed of a thermoplastic, preferably thermoplastic polyurethane. Such materials can survive the high temperatures of vulcanisation. They would typically have too large a compressive resistance to act as a cushioning insert, but the air pockets or channels allow them to be cushioning.

The cavity may extend into at least 50% of the depth of the sole member in the surrounding area and the insert is complementarily sized and shaped. This allows the insert to have a particularly appreciable cushioning effect.

The cavity may extend across at least 50% of the width of the sole member and the insert is complementarily sized and shaped. This allows the insert to contact the sole of the wearer across the majority of their heel.

The item of footwear may be a boot with a height of at least 100 mm, preferably at least 150 mm, most preferably at least 200 mm. Boots of this size are typically made of such rubber materials.

An item of footwear according to the present invention is defined by claim 9. This is a vulcanised rubber item of footwear with increased comfort and reduced weight.

An example item of footwear is provided comprising: a sole member formed of a first rubber material having a first compressive resistance, the sole member comprising a cavity in the heel region; an insert arranged within the cavity, the insert having a second compressive resistance lower than the first compressive resistance; and an upper part formed of a second rubber material attached to the sole member, wherein the insert is formed of a material with a melting temperature greater than 140º C.

This is a vulcanised rubber item of footwear with increased comfort and reduced weight. The first rubber material may comprise synthetic rubber in an amount of from about 4 wt% to about 6 wt% and natural rubber in an amount of from about 40 wt% to about 50 wt% based on the total weight of the first rubber material, and/or the second rubber material comprises synthetic rubber in an amount of from about 4 wt% to about 6 wt% and natural rubber in an amount of from about 40 wt% to about 50 wt% based on the total weight of the second rubber material

The first and/or second rubber material may consist essentially of: a natural rubber, a synthetic rubber, silicon dioxide and/or calcium carbonate, and one or more of zinc oxide, an accelerant and an antioxidant.

The insert may comprise a plurality of air pockets or channels arranged within the insert.

These act to reduce the compressive resistance of a material. In particular, a material which may have as a solid block a compressive resistance which is too large to be cushioning can be modified into a cushioning material by the introduction of these air pockets or channels. This also reduces the weight of the insert.

The air pockets or channels may be regularly arranged within the insert. Regularly arranged air pockets or channels distribute the compressive resistance evenly across the insert.

The air pockets or channels may form a honeycomb structure. A honeycomb structure is an effective pattern for these air pockets or channels.

The cavity may extend into at least 50% of the depth of the sole member in the surrounding area and the insert is complementarily sized and shaped. This allows the insert to have a particularly appreciable cushioning effect.

The cavity may extend across at least 50% of the width of the sole member and the insert is complementarily sized and shaped. This allows the insert to contact the sole of the wearer across the majority of their heel.

The item of footwear may be a boot with a height of at least 100 mm, preferably 150 mm, most preferably 200 mm. Boots of this size are typically made of such rubber materials.

The present invention will now be described with reference to the accompanying figures in which:
Figure 1 shows a longitudinal cross-section of an item of footwear according to the present invention;
Figure 2 shows a plan cross-sectional view of the item of footwear of Figure 1;
Figure 3 shows a bottom view of the item of footwear of Figure 1;
Figure 4 shows a transverse cross-sectional view of the item of footwear, along the line H-H of Figure 1;
Figure 5 shows a schematic view of a possible structure for the insert of the item of footwear of claim 1; and
Figure 6 shows a flow diagram of a method of forming an item of footwear according to the present invention.

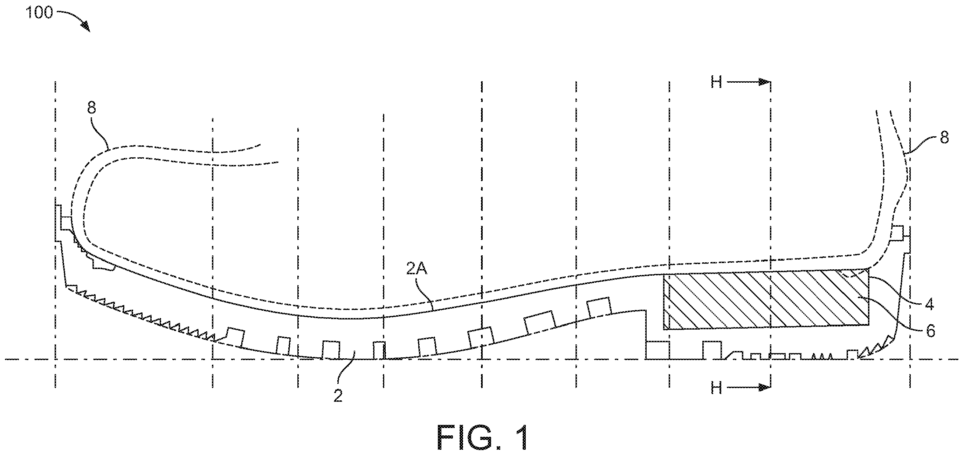

Figure 1 shows an item of footwear 100 according to the present invention. The item of footwear 100 comprises a sole member 2. The sole member 2 may consist of one or more components of a sole structure. In particular, the sole member 2 may be an outer, mid or inner sole. In preferred embodiments, the sole member 2 may be an outer or mid sole. The sole member 2 may be arranged to contact the ground during use of the item of footwear 100. The sole member 2 is formed of a first vulcanised rubber material and is generally shaped to conform to a human foot. This first vulcanised rubber material will have a first compressive resistance.

A first rubber material (prior to vulcanisation to form the first vulcanised rubber material) may comprise natural rubber and/or synthetic rubber. In one embodiment, the first rubber material comprises at least 5 wt%, preferably at least 25 wt%, more preferably at least 35 wt%, and most preferably at least 45 wt% of natural rubber and/or synthetic rubber based on the total weight of the first rubber material. In one embodiment, the first rubber material may comprise up to 95 wt% of natural rubber and/or synthetic rubber, preferably up to 75 wt%, more preferably 65 wt%, and most preferably up to 55 wt% of natural rubber and/or synthetic rubber based on the total weight of the first rubber material. In a preferred embodiment, the first rubber material comprises about 35 wt% to about 65 wt%, more preferably about 45 wt% to about 55 wt% natural rubber and/or synthetic rubber. In a preferred embodiment, the first rubber material comprises about 50 wt% natural rubber and/or synthetic rubber. Preferably, the first rubber material comprises natural rubber and synthetic rubber.

In one embodiment, the amount of natural rubber in the first rubber material is at least 15 wt%, preferably at least 25 wt%, more preferably at least 35 wt% and most preferably at least 40 wt% based on the total weight of the first rubber material. In one embodiment, the amount of natural rubber in the first rubber material is up to 75 wt%, preferably up to 65 wt%, more preferably up to 55 wt%, and most preferably up to 50 wt%. In a preferred embodiment, the amount of natural rubber in the first rubber material is from about 35 wt% to about 55 wt%, preferably from about 40 wt% to about 50 wt%, and most preferably about 45 wt%, based on the total weight of the first rubber material.

In one embodiment, the amount of synthetic rubber in the first rubber material is at least 1 wt%, preferably at least 2 wt%, more preferably at least 3 wt% and most preferably at least 4 wt% based on the total weight of the first rubber material. In one embodiment, the amount of synthetic rubber in the first rubber material is up to 20 wt%, preferably up to 15 wt%, more preferably up to 10 wt%, even more preferably up to 8 wt% and most preferably up to 6 wt%. In a preferred embodiment, the amount of synthetic rubber in the first rubber material is from about 3 wt% to about 7 wt%, preferably from about 4 wt% to about 6 wt% and most preferably about 5 wt%, based on the total weight of the first rubber material.

In a preferred embodiment, the first rubber material comprises natural rubber in an amount of from about 40 wt% to about 50 wt% and synthetic rubber in an amount of from about 4 wt% to about 6 wt%. In a most preferred embodiment, the first rubber material comprises about 45 wt% natural rubber and about 5 wt% synthetic rubber.

The first rubber material may further comprise one or more fillers. Suitable fillers are known in the art. Preferably, the first rubber material comprises silicon dioxide and/or calcium carbonate, preferably silicon dioxide and calcium carbonate. In a preferred embodiment, the total amount of the one or more fillers is from about 35 wt% to about 55 wt%, preferably from about 40 wt% to about 50 wt%, and most preferably about 45 wt%, based on the total weight of the first rubber material.

The first rubber material may further comprise one or more additives to improve the strength, heat resistance and/or stability to ultraviolet radiation. Suitable additives are known in the art. Preferably, the first rubber material comprises one or more of zinc oxide, an accelerant and an antioxidant, preferably the first rubber material comprises zinc oxide, an accelerant and an antioxidant. In a preferred embodiment, the total amount of the one or more of zinc oxide, an accelerant and an antioxidant is from about 3 wt% to about 7 wt%, preferably from about 4 wt% to about 6 wt% and most preferably about 5 wt%, based on the total weight of the first rubber material.

In a preferred embodiment, the first rubber material comprises from about 40 wt% to about 50 wt% of natural rubber, about 4 wt% to about 6 wt% of synthetic rubber, from about 40 wt% to about 50 wt% of silicon dioxide and calcium carbonate, and from about 4 wt% to about 6 wt% of zinc oxide, an accelerant and an antioxidant.

Preferably, the first rubber material consists of a natural rubber, a synthetic rubber, silicon dioxide and/or calcium carbonate, and one or more of zinc oxide, an accelerant and an antioxidant, each present in the amounts described herein.

*"Synthetic Rubber"* is intended to mean any artificial elastomer. Typically, these are polymers synthesised from petroleum byproducts. Exemplary synthetic rubbers include styrene-butadiene copolymer, nitrile rubber, neoprene, ethylene-propylene-diene-monomer rubber, silicon rubber and butyl rubber.

*"Natural Rubber"* is intended to mean a rubber obtained from non-petroleum sources. Typically, natural rubber is a biosynthetic polymer obtained from a tree called *"Hevea brasiliensis"* as an aqueous solution. Natural rubber is mainly poly-cis-isoprene containing typically up to about 5 wt% of other materials such as protein, fatty acids, resins and inorganic salts.

Any accelerant or antioxidant known in the art may be used in the rubber material according to the present invention. Exemplary accelerants that may be used include those formed of sulfenamides, thiazoles, thiurams and dithiocarbamates. Exemplary antioxidants that may be used include those derived from phenols, secondary aromatic amines and benzimidazoles.

The sole member 2 further comprises an upper surface 2A with a cavity 4 formed therein. The cavity 4 is generally formed in a heel region of the item of footwear 100. That is, a region which is arranged, in use, to contact a user's heel. This cavity may extend approximately 50% of the depth of the sole member 2 in the heel region.

An insert 6 is provided within the cavity 4. The insert 6 is arranged within this cavity 4 and may be retained therein by any suitable method. For example, the insert 6 may be retained within the cavity 4 by way of an interference fit or by way of an adhesive being applied to one or both of the insert 6 or cavity 4. The insert 6 has a second compressive resistance. This second compressive resistance is lower than the first compressive resistance of the sole member 2. That is, the insert 6 is softer than the sole member 2. As such, the insert 6 may feel more comfortable to a user of the item of footwear 100. The insert 6 is generally sized and shaped complimentarily to the cavity 4 of the item of footwear 100. That is, the insert 6 is arranged to substantially fill all of the space of the cavity and form a generally continuous upper layer 2A of the sole member 2.

The item of footwear 100 further comprises an upper part 8. This upper part 8 may be a shoe upper or may be any subcomponent thereof. The upper part 8 is formed of a second vulcanised rubber material and is attached to the sole member 2 by virtue of a vulcanisation process. The second vulcanised rubber material may have a composition the same as that described herein in relation to the first vulcanised rubber material. In one embodiment, the second vulcanised rubber material may be the same as the first vulcanised rubber material. Alternatively, the first and second vulcanised rubber materials may be different compositions selected due to having more suitable mechanical properties for their respective tasks.

Vulcanisation is the chemical process used to harden rubber. Traditionally, this has comprised the treatment of a natural rubber with sulphur but now extends to the hardening of other synthetic and natural rubbers by various means. Typically, this vulcanisation process is carried out at a temperature in the region of 140°C to 180°C. The insert 6 is therefore formed of a material which is solid at at least 140°C, preferably at at least 180°C. That is, the material has a melting temperature greater than 140°C, preferably greater than about 180°C. Accordingly, the insert 6 does not melt during the vulcanisation process which attaches the upper part 8 to the sole member 2. An example of suitable material for the insert 6 is a thermoplastic. In particular, thermoplastic polyurethane (TPU) may be a suitable material for the insert 6.

However, such materials which can survive vulcanisation may not be as comfortable compared to other insert materials which are not stable at these temperatures. As such, it may be preferable if the insert 6 is not a solid block. Instead, the insert 6 may comprise a structure formed of the material.

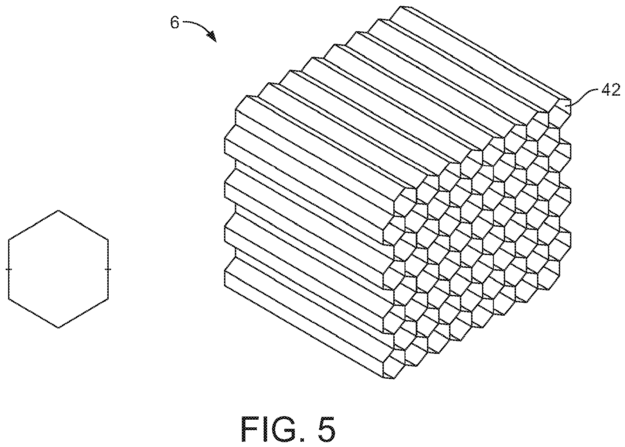

For example, Figure 5 shows an exemplary insert 6. The insert 6 is formed of a material which comprises a plurality of air pockets or channels 42. The air pockets or channels 42 may be open ended as shown in Figure 5 or may have a closed end. There may further be transverse closures within the air pockets or channels 42. These air pockets or channels 42 may be regularly arranged within the insert 6. For example, as shown in Figure 5, the air pockets or channels may be arranged to form a honeycomb structure. That is, a tessellated structure of hexagons as shown in Figure 5. Alternatively, any other arrangement may be possible. In particular, other tessellated arrangements may be suitable. It is not necessary for each of the air pockets or channels 42 to be identically shaped. It may be that the shapes of the air pockets or channels 42 are selected are complimentary to impart particular properties to the insert 6. For example, certain arrangements may make the insert 6 have a higher or lower compressive resistance. In certain embodiments, the insert 6 may be selected to provide a certain characteristic which the user desires from the item of footwear 100. In certain arrangements, the air pockets or channels may be irregularly arranged and/or shaped in order to vary the properties, such as compressive resistance, across the insert 6.

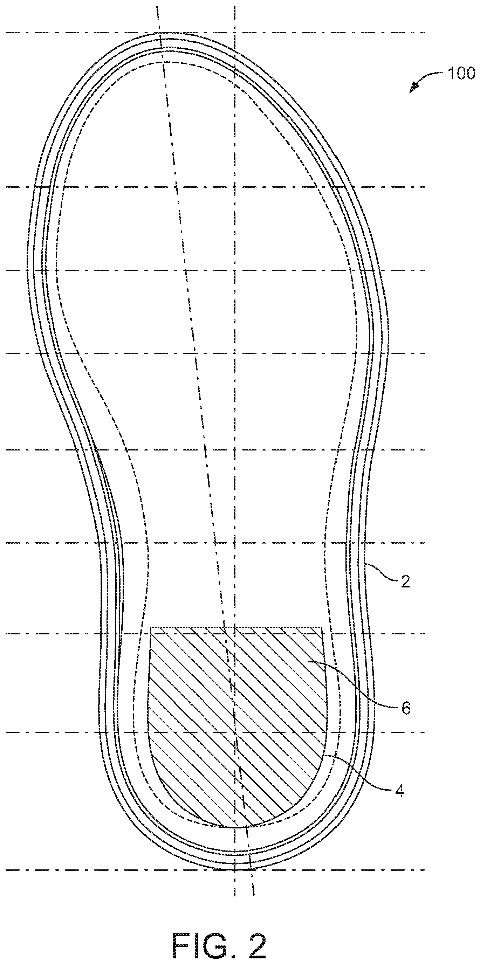

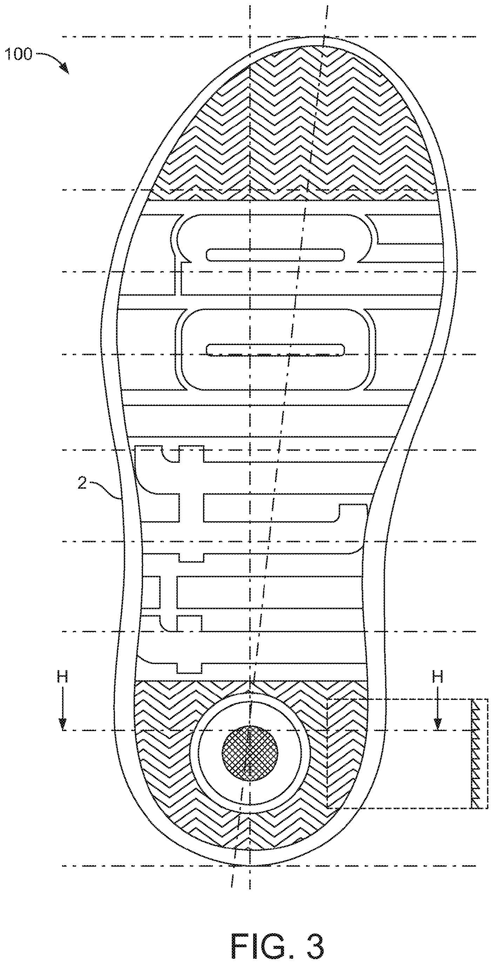

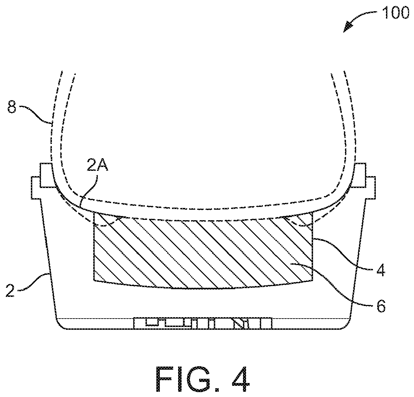

As shown in Figure 2, the insert 6 generally conforms to the shape of a user's heel within the heel region of the item of footwear 100. The insert 6 may extend across at least 50% of the width of the sole member 2. Preferably, the insert may extend across at least 70% of the width of the sole member 2. An underside of the item of footwear 100 is shown in Figure 3 and the cross-section taken along the line H-H of Figure 1 is shown in Figure 4.

Figure 4 reshows the extent of the depth and width to which the insert 6 extends within the sole member 2.

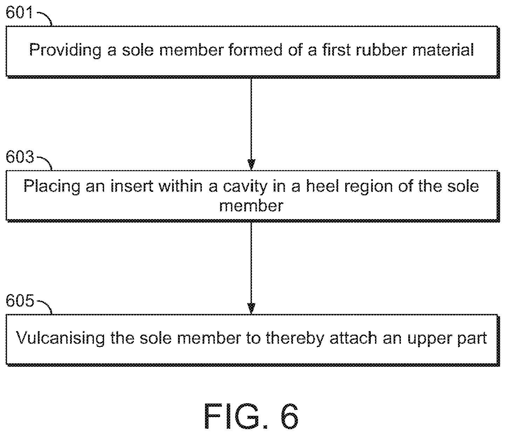

A method of forming an item of footwear 100 according to the present invention is also provided according to the present invention. The method is depicted in Figure 6 and comprises a first step 601 of providing a sole member 2 formed of a first rubber material. The first vulcanised rubber material has a first compressive resistance. The sole member 2 comprises a cavity 4 in an upper surface 2a of a heel region of the sole member 2. In step 603 an insert 6 is placed within the cavity 4 of the sole member 2. The insert 6 has a second compressive resistance which is lower than the first compressive resistance of the rubber material of the sole member 2. In step 605 the sole member 2 and insert 4 are then vulcanised to thereby attach an upper part 8 to the sole member 2. The upper part 8 is formed of a second rubber material which may be the same as or different from the first rubber material. The vulcanisation takes place at a first temperature. This first temperature may be in the region of 140°C to 180°C. The insert 8 is formed of a material which is solid at this first temperature. That is, the insert 8 is formed of a material with a melting temperature greater than the first temperature.

The first step, 601 may comprise moulding the sole member 2 to form the cavity 4. That is, the mould for the sole member 2 may comprise a protrusion which prevents the first rubber material from filling the region of the cavity 4. Alternatively, the cavity 4 may be formed by removing material from a having been moulded sole member 2.

As discussed above with respect to the item of footwear 100, the insert 6 may generally be formed so as to increase the comfort of the user of the item of footwear 100. In order to further increase this comfort the insert 6 may be formed in a structure comprising a plurality of air pockets or channels 42. These air pockets or channels 42 may be regularly arranged within the insert 6, for example, to form a plurality of generally tessellating shapes. The shapes may all be identical, such as in a honeycomb structure, or the structure may comprise a structure of different shapes.

Any of the features described with respect to either embodiment of the present invention may be incorporated into the other embodiments. The item of footwear 100 may be a boot with a height of at least 100 mm, preferably at least 150 mm, most preferably at least 200 mm. In particular, this item of footwear 100 may be a Wellington boot. That is, a boot formed generally of rubber (natural or synthetic) which is designed to be waterproof and formed via a vulcanisation process.

## Claims

1. A method of forming an item of footwear (100) comprising the steps of:
(a) providing a sole member (2) formed of a first rubber material having a first compressive resistance, the sole member (2) comprising a cavity (4) in an upper surface (2A) of a heel region of the sole member (2);
(b) placing an insert (6) into the cavity (4), the insert (6) having a second compressive resistance lower than the first compressive resistance; and then
(c) vulcanising to thereby attach an upper part (8) formed of a second rubber material to the sole member (2) at a first temperature,
wherein the insert (6) is formed of a material which is solid at the first temperature.

2. The method of claim 1, wherein step (a) comprises moulding the sole member (2) to form the cavity (4).

3. The method of claim 1 or 2, wherein the first rubber material comprises synthetic rubber in an amount of from about 4 wt% to about 6 wt% and natural rubber in an amount of from about 40 wt% to about 50 wt% based on the total weight of the first rubber material, and/or the second rubber material comprises synthetic rubber in an amount of from about 4 wt% to about 6 wt% and natural rubber in an amount of from about 40 wt% to about 50 wt% based on the total weight of the second rubber material,
preferably the first and/or second rubber material consists essentially of:
a natural rubber,
a synthetic rubber,
silicon dioxide and/or calcium carbonate, and
one or more of zinc oxide, an accelerant and an antioxidant.

4. The method of any of claims 1 to 3, wherein the insert (6) comprises a plurality of air pockets or channels (42) arranged within the insert (6),
preferably the air pockets or channels (42) are regularly arranged within the insert (6).

5. The method of claim 4, wherein the air pockets or channels (42) form a honeycomb structure.

6. The method of any of claims 4 to 5, wherein the insert (6) is formed of a thermoplastic, preferably thermoplastic polyurethane.

7. The method of any of claims 1 to 6, wherein the cavity (4) extends into at least 50% of the depth of the sole member (2) in the surrounding area and the insert (6) is complementarily sized and shaped.

8. The method of any of claims 1 to 7, wherein the cavity (4) extends across at least 50% of the width of the sole member (2) and the insert (6) is complementarily sized and shaped.

9. An item of footwear (100) produced according to the method of any of claims 1 to 8, comprising:
a sole member (2) formed of a first rubber material having a first compressive resistance, the sole member (2) comprising a cavity (4) in an upper surface (2A) of a heel region of the sole member (2);
an insert (6) arranged within the cavity (4), the insert (6) having a second compressive resistance lower than the first compressive resistance;
an upper part (8) formed of a second rubber material vulcanised to the sole member (2) at a first temperature, wherein the insert (6) is formed of a material which is solid at the first temperature,
wherein:
the insert (6) is retained in the cavity (4) and fills all of the cavity (4) to form a generally continuous upper layer with the upper surface (2A) of the sole member (2); and the upper part (8) extends over the generally continuous upper layer of the upper surface (2A) of the sole member (2) and the insert (6).

10. The item of footwear (100) of claim 9 wherein the first temperature is greater than 140º C.

11. The item of footwear (100) of claim 10, wherein the first rubber material comprises synthetic rubber in an amount of from about 4 wt% to about 6 wt% and natural rubber in an amount of from about 40 wt% to about 50 wt% based on the total weight of the first rubber material, and/or the second rubber material comprises synthetic rubber in an amount of from about 4 wt% to about 6 wt% and natural rubber in an amount of from about 40 wt% to about 50 wt% based on the total weight of the second rubber material,
preferably the first and/or second rubber material consists essentially of:
a natural rubber,
a synthetic rubber,
silicon dioxide and/or calcium carbonate, and
one or more of zinc oxide, an accelerant and an antioxidant.

12. The item of footwear (100) of any of claims 10 to 11, wherein the insert (6) comprises a plurality of air pockets or channels (42) arranged within the insert (6), preferably the air pockets or channels (42) are regularly arranged within the insert (6).

13. The item of footwear (100) of claim 12, wherein the air pockets or channels (42) form a honeycomb structure.

14. The item of footwear (100) of any of claims 10 to 13, wherein the cavity (4) extends into at least 50% of the depth of the sole member (2) in the surrounding area and the insert (6) is complementarily sized and shaped.

15. The item of footwear (100) of any of claims 10 to 14, wherein the cavity (4) extends across at least 50% of the width of the sole member (2) and the insert (6) is complementarily sized and shaped.

## Patentansprüche

1. Verfahren zur Herstellung von Schuhwerk (100) mit den Schritten:
(a) Bereitstellen eines Sohlenelements (2), das aus einem ersten Gummimaterial mit einer ersten Druckfestigkeit gebildet ist, wobei das Sohlenelement (2) einen Hohlraum (4) an einer Oberseite (2A) eines Absatzbereichs des Sohlenelements (2) umfasst;
(b) Platzieren eines Einsatzes (6) in den Hohlraum (4), wobei der Einsatz (6) eine zweite Druckfestigkeit aufweist, die niedriger ist als die erste Druckfestigkeit; und dann
(c) Vulkanisieren bei einer ersten Temperatur, um dadurch ein aus einem zweiten Gummimaterial gebildetes Oberteil (8) an dem Sohlenelement (2) zu befestigen,
wobei der Einsatz (6) aus einem Material gebildet ist, das bei der ersten Temperatur fest ist.

2. Verfahren nach Anspruch 1, bei dem Schritt (a) das Abformen des Sohlenelements (2) zur Bildung des Hohlraums (4) umfasst.

3. Verfahren nach Anspruch 1 oder 2, bei dem das erste Gummimaterial synthetisches Gummi in einer Menge von etwa 4 Gew.-% bis etwa 6 Gew.-% und Naturkautschuk in einer Menge von etwa 40 Gew.-% bis etwa 50 Gew.-%, bezogen auf das Gesamtgewicht des ersten Gummimaterials, umfasst, und/oder das zweite Gummimaterial synthetisches Gummi in einer Menge von etwa 4 Gew.-% bis etwa 6 Gew.-% und Naturkautschuk in einer Menge von etwa 40 Gew.-% bis etwa 50 Gew.-%, bezogen auf das Gesamtgewicht des zweiten Gummimaterials, umfasst,
wobei vorzugsweise das erste und/ oder zweite Kautschukmaterial im Wesentlichen besteht aus:
einem Naturkautschuk,
einem synthetischen Gummi,
Siliziumdioxid und/oder Kalziumkarbonat, und
einem oder mehreren von Zinkoxid, einem Beschleuniger und einem Antioxidationsmittel.

4. Verfahren nach einem der Ansprüche 1 bis 3, bei dem der Einsatz (6) eine Mehrzahl von Lufttaschen oder Kanälen (42) umfasst, die innerhalb des Einsatzes (6) angeordnet sind, wobei die Lufttaschen oder Kanäle (42) vorzugsweise regelmäßig innerhalb des Einsatzes (6) angeordnet sind.

5. Verfahren nach Anspruch 4, bei dem die Lufttaschen oder - kanäle (42) eine Wabenstruktur bilden.

6. Verfahren nach einem der Ansprüche 4 bis 5, bei dem der Einsatz (6) aus einem thermoplastischen Kunststoff, vorzugsweise aus thermoplastischem Polyurethan, gebildet wird.

7. Verfahren nach einem der Ansprüche 1 bis 6, bei dem sich der Hohlraum (4) über mindestens 50 % der Tiefe des Sohlenelements (2) im Umgebungsbereich erstreckt und der Einsatz (6) komplementär bemessen und geformt ist.

8. Verfahren nach einem der Ansprüche 1 bis 7, bei dem sich der Hohlraum (4) über mindestens 50 % der Breite des Sohlenelements (2) erstreckt und der Einsatz (6) komplementär bemessen und geformt ist.

9. Schuhwerk (100), hergestellt nach dem Verfahren eines der Ansprüche 1 bis 8, umfassend
ein Sohlenelement (2), das aus einem ersten Gummimaterial mit einer ersten Druckfestigkeit gebildet ist, wobei das Sohlenelement (2) einen Hohlraum (4) an einer Oberseite (2A) eines Absatzbereichs des Sohlenelements (2) umfasst;
einen Einsatz (6), der in dem Hohlraum (4) angeordnet ist, wobei der Einsatz (6) eine zweite Druckfestigkeit aufweist, die geringer ist als die erste Druckfestigkeit;
ein aus einem zweiten Gummimaterial gebildetes Oberteil (8), das mit dem Sohlenelement (2) bei einer ersten Temperatur vulkanisiert ist, wobei der Einsatz (6) aus einem Material gebildet ist, das bei der ersten Temperatur fest ist,
wobei:
der Einsatz (6) in dem Hohlraum (4) gehalten ist und den gesamten Hohlraum (4) ausfüllt, um mit der oberen Fläche (2A) des Sohlenelements (2) eine allgemein durchgehende obere Schicht zu bilden; und das Oberteil (8) sich über die allgemein durchgehende obere Schicht der Oberseite (2A) des Sohlenelements (2) und den Einsatz (6) erstreckt.

10. Schuhwerk (100) nach Anspruch 9, bei dem die erste Temperatur höher als 140° C ist.

11. Schuhwerk (100) nach Anspruch 10, bei dem das erste Gummimaterial synthetisches Gummi in einer Menge von etwa 4 Gew.-% bis etwa 6 Gew.-% und Naturkautschuk in einer Menge von etwa 40 Gew.-% bis etwa 50 Gew.-%, bezogen auf das Gesamtgewicht des ersten Gummimaterials, umfasst, und/oder das zweite Gummimaterial synthetisches Gummi in einer Menge von etwa 4 Gew.-% bis etwa 6 Gew.-% und Naturkautschuk in einer Menge von etwa 40 Gew.-% bis etwa 50 Gew.-%, bezogen auf das Gesamtgewicht des zweiten Gummimaterials, umfasst,
wobei vorzugsweise das erste und/ oder zweite Gummimaterial im Wesentlichen besteht aus:
einem Naturkautschuk,
einem synthetischen Gummi,
Siliziumdioxid und/oder Kalziumkarbonat, und
einem oder mehreren von Zinkoxid, einem Beschleuniger und einem Antioxidationsmittel.

12. Schuhwerk (100) nach einem der Ansprüche 10 bis 11, bei dem der Einsatz (6) eine Mehrzahl von in dem Einsatz (6) angeordneten Lufttaschen oder Kanälen (42) umfasst,
wobei vorzugsweise die Lufttaschen oder -kanäle (42) regelmäßig in dem Einsatz (6) angeordnet sind.

13. Schuhwerk (100) nach Anspruch 12, bei dem die Lufttaschen oder -kanäle (42) eine Wabenstruktur bilden.

14. Schuhwerk (100) nach einem der Ansprüche 10 bis 13, bei dem sich der Hohlraum (4) über mindestens 50 % der Tiefe des Sohlenelements (2) im Umgebungsbereich erstreckt und der Einsatz (6) komplementär bemessen und geformt ist.

15. Schuhwerk (100) nach einem der Ansprüche 10 bis 14, bei dem sich der Hohlraum (4) über mindestens 50 % der Breite des Sohlenelements (2) erstreckt und der Einsatz (6) komplementär bemessen und geformt ist.

## Revendications

1. Procédé de formation d'un article chaussant (100) comprenant les étapes consistant à :
(a) fournir un élément de semelle (2) formé d'un premier matériau en caoutchouc ayant une première résistance à la compression, l'élément de semelle (2) comprenant une cavité (4) dans une surface supérieure (2A) d'une région de talon de l'élément de semelle (2) ;
(b) placer un insert (6) dans la cavité (4), l'insert (6) ayant un seconde résistance à la compression inférieure à la première résistance à la compression ; et ensuite
(c) vulcaniser pour fixer ainsi une partie supérieure (8) formée d'un second matériau en caoutchouc à l'élément de semelle (2) à une première température,
dans lequel l'insert (6) est formé d'un matériau qui est solide à la première température.

2. Procédé selon la revendication 1, dans lequel l'étape (a) comprend le moulage de l'élément de semelle (2) pour former la cavité (4).

3. Procédé selon la revendication 1 ou 2, dans lequel le premier matériau en caoutchouc comprend du caoutchouc synthétique selon une quantité d'environ 4 % en poids à environ 6 % en poids et du caoutchouc naturel selon une quantité d'environ 40 % en poids à environ 50 % en poids sur la base du poids total du premier matériau en caoutchouc, et/ou le second matériau en caoutchouc comprend du caoutchouc synthétique selon une quantité d'environ 4 % en poids à environ 6 % en poids et du caoutchouc naturel selon une quantité d'environ 40 % en poids à environ 50 % en poids sur la base du poids total du second matériau en caoutchouc,
de préférence, le premier et/ou le second matériau en caoutchouc est constitué essentiellement de :
un caoutchouc naturel,
un caoutchouc synthétique,
du dioxyde de silicium et/ou du carbonate de calcium, et
un ou plusieurs éléments parmi de l'oxyde de zinc, un accélérateur et un antioxydant.

4. Procédé selon l'une quelconque des revendications 1 à 3, dans lequel l'insert (6) comprend une pluralité de poches ou canaux d'air (42) disposés à l'intérieur de l'insert (6),
de préférence les poches ou canaux d'air (42) sont régulièrement disposés à l'intérieur de l'insert (6).

5. Procédé selon la revendication 4, dans lequel les poches ou canaux d'air (42) forment une structure en nid d'abeilles.

6. Procédé selon l'une quelconque des revendications 4 à 5, dans lequel l'insert (6) est formé d'un composé thermoplastique, de préférence du polyuréthane thermoplastique.

7. Procédé selon l'une quelconque des revendications 1 à 6, dans lequel la cavité (4) s'étend sur au moins 50 % de la profondeur de l'élément de semelle (2) dans la zone environnante et l'insert (6) est dimensionné et façonné de manière complémentaire.

8. Procédé selon l'une quelconque des revendications 1 à 7, dans lequel la cavité (4) s'étend à travers au moins 50 % de la largeur de l'élément de semelle (2) et l'insert (6) est dimensionné et façonné de manière complémentaire.

9. Article chaussant (100) produit conformément au procédé selon l'une quelconque des revendications 1 à 8, comprenant :
un élément de semelle (2) formé d'un premier matériau en caoutchouc ayant une première résistance à la compression, l'élément de semelle (2) comprenant une cavité (4) dans une surface supérieure (2A) d'une région de talon de l'élément de semelle (2) ;
un insert (6) disposé à l'intérieur de la cavité (4), l'insert (6) ayant une seconde résistance à la compression inférieure à la première résistance à la compression ;
une partie supérieure (8) formée d'un second matériau en caoutchouc vulcanisé sur l'élément de semelle (2) à une première température, dans lequel l'insert (6) est formé d'un matériau qui est solide à la première température,
dans lequel :
l'insert (6) est retenu dans la cavité (4) et remplit la totalité de la cavité (4) pour former une couche supérieure généralement continue avec la surface supérieure (2A) de l'élément de semelle (2) ; et la partie supérieure (8) s'étend sur la couche supérieure généralement continue de la surface supérieure (2A) de l'élément de semelle (2) et l'insert (6).

10. Article chaussant (100) selon la revendication 9, dans lequel la première température est supérieure à 140°C.

11. Article chaussant (100) selon la revendication 10, dans lequel le premier matériau en caoutchouc comprend du caoutchouc synthétique selon une quantité d'environ 4 % en poids à environ 6 % en poids et du caoutchouc naturel selon une quantité d'environ 40 % en poids à environ 50 % en poids sur la base du poids total du premier matériau en caoutchouc, et/ou le second matériau en caoutchouc comprend du caoutchouc synthétique selon une quantité d'environ 4 % en poids à environ 6 % en poids et du caoutchouc naturel selon une quantité d'environ 40 % en poids à environ 50 % en poids sur la base du poids total du second matériau en caoutchouc,
de préférence, le premier et/ou le second matériau en caoutchouc est constitué essentiellement de :
un caoutchouc naturel,
un caoutchouc synthétique,
du dioxyde de silicium et/ou du carbonate de calcium, et
un ou plusieurs éléments parmi de l'oxyde de zinc, un accélérateur et un antioxydant.

12. Article chaussant (100) selon l'une quelconque des revendications 10 à 11, dans lequel l'insert (6) comprend une pluralité de poches ou canaux d'air (42) disposés à l'intérieur de l'insert (6),
de préférence, les poches ou canaux d'air (42) sont disposés régulièrement à l'intérieur de l'insert (6).

13. Article chaussant (100) selon la revendication 12, dans lequel les poches ou canaux d'air (42) forment une structure en nid d'abeilles.

14. Article chaussant (100) selon l'une quelconque des revendications 10 à 13, dans lequel la cavité (4) s'étend sur au moins 50 % de la profondeur de l'élément de semelle (2) dans la zone environnante et l'insert (6) est dimensionné et façonné de manière complémentaire.

15. Article chaussant (100) selon l'une quelconque des revendications 10 à 14, dans lequel la cavité (4) s'étend à travers au moins 50 % de la largeur de l'élément de semelle (2) et l'insert (6) est dimensionné et façonné de manière complémentaire.
